# FASCICULE DE BREVET EUROPEEN

(11) **EP 3 252 021 B1**
(45) Date de publication et mention de la délivrance du brevet: **05.08.2020**
(21) Numéro de dépôt: 17173282.9
(22) Date de dépôt: 29.05.2017
(51) Int. Cl.: C03C 1/00

(54) **COMPOSITION INTERMEDIAIRE POUR VERRE BLANC, PROCEDE D'ELABORATION D'UNE TELLE COMPOSITION ET PROCEDE DE FABRICATION D'UN ARTICLE EN VERRE BLANC**
ZWISCHENPRODUKT FÜR WEISSGLAS, HERSTELLUNGSVERFAHREN EINER SOLCHEN VERBINDUNG UND HERSTELLUNGSVERFAHREN EINES ARTIKELS AUS WEISSGLAS
INTERMEDIATE COMPOSITION FOR WHITE GLASS, METHOD FOR PRODUCING SUCH A COMPOSITION AND METHOD FOR MANUFACTURING A WHITE GLASS ITEM

(30) Priorité: 30.05.2016 FR 1654857
(43) Date de publication de la demande: 06.12.2017
(73) Titulaire: Verescence France, 92800 Puteaux (FR)
(72) Inventeur: GUYOT, Laurent Pierre Marie, 59161 ESCAUDOEUVRES (FR); JOACHIM, Samuel Marie, 76260 EU (FR)
(74) Mandataire: Weber, Jean-François

(56) Documents cités:
- US-A1- 2015 147 497
- Bianca Maria Scalet ET AL: "Best Available Techniques (BAT) Reference Document for the Manufacture of Glass", Report EUR 25786 EN, 1 janvier 2013 (2013-01-01), page 96-101, 314-316, XP055340675, DOI: 10.2791/69502 Extrait de l'Internet: URL:http://bookshop.europa.eu/is-bin/INTER SHOP.enfinity/WFS/EU-Bookshop-Site/en_GB/- /EUR/ViewPublication-Start?PublicationKey= LFNA25786 [extrait le 2017-01-31]

## Description

La présente invention se rapporte au domaine général du verre, des compositions intermédiaires de verre et des procédés d'élaboration de compositions intermédiaires de verre. Elle se rapporte également au domaine des procédés de fabrication d'articles en verre à partir de compositions intermédiaire de verre.

L'invention concerne plus précisément une composition intermédiaire destinée à subir une fusion pour être transformée en verre blanc.

L'invention concerne également un procédé d'élaboration d'une composition intermédiaire destinée à subir une fusion pour être transformée en verre blanc.

L'invention concerne en outre un procédé de fabrication d'un article en verre blanc, par exemple pour une application en cosmétique ou en parfumerie.

De manière générale, il est connu d'incorporer du calcin, c'est-à-dire des débris de verre de récupération, dans des compositions intermédiaires destinées à subir une fusion pour être transformées en verre blanc dans l'optique de fabriquer des articles en verre blanc, c'est-à-dire des articles en verre incolore et transparent. En effet, le verre étant un matériau potentiellement recyclable à l'infini et le calcin nécessitant pour sa fusion une énergie moindre que celle qui est habituellement nécessaire pour transformer de la matière première nouvelle de verre en verre, il est dès lors possible de réduire les coûts de fabrication du verre tout en limitant significativement l'impact environnemental des activités verrières (moindre sollicitation de ressources naturelles vierges, réduction des émissions de dioxyde de carbone, réduction des consommations en énergie électrique ou fossile, etc.).

Une des techniques les plus répandues consistent à incorporer à de la matière première nouvelle de verre une quantité plus ou moins importante de calcin industriel, en général de l'ordre de 30 %, c'est-à-dire du verre broyé issu d'activités industrielles qui utilisent, transforment ou produisent du verre plat ou du verre creux et qui génèrent à ce titre des pertes accidentelles ou des rebus de verre. Cette technique relativement ancienne présente pour les verriers l'intérêt de permettre le recyclage de leurs propres déchets industriels de verre, tout en garantissant une grande maîtrise des qualités optiques et colorimétriques du verre fabriqué, et en particulier sa clarté et la transparence.

Depuis l'avènement des politiques publiques en faveur de la collecte du verre d'emballage alimentaire ou « *verre creux* » (*e.g.* bouteilles, pots, flacons, bocaux) issu de la consommation des ménages, une seconde technique consiste à incorporer une portion plus ou moins importante de calcin ménager à de la matière première nouvelle pour la fabrication de nouveaux articles en verre. Toutefois, si cette seconde technique donne généralement satisfaction, au sens où elle permet d'obtenir des articles en verre affichant un bilan énergétique et environnement bien meilleur que ceux obtenus à partir de matière première nouvelle seule ou d'un mélange de matière première nouvelle et de calcin industriel, elle n'en présente cependant pas moins certains inconvénients.

En effet, le principal inconvénient de l'emploi de calcin ménager dans la fabrication de verre neuf est relatif à la teinte verte ou vert-bieue, plus ou moins marquée, que tend à impartir au verre la présence d'impuretés de fer dans ce calcin ménager. De fait, la réutilisation de calcin ménager a longtemps été cantonnée à la production de nouveaux articles en verre blanc pour des applications tolérant la présence d'une teinte verte ou vert-bleue, par exemple pour des emballages alimentaires classiques. En outre, cette technique de recyclage de calcin ménager est généralement connue pour la production de nouveaux articles en verre coloré (par exemple du verre vert ou ambré), laquelle est peu gênée par la présence de ces impuretés de fer, qui peuvent soit se révéler être un atout (une forte teneur en fer permet d'obtenir un verre vert), soit être facilement compensée ou masquée par l'incorporation aux compositions intermédiaires d'un agent de décoloration du verre.

S'il est, en théorie, possible d'obtenir du verre parfaitement incolore, c'est-à-dire en particulier exempt de toute teinte verte ou vert-bleue, à partir de calcin ménager en utilisant une importante quantité d'agent de décoloration de verre, cela se fait cependant au fort détriment de la transparence du verre obtenu. C'est pour cette raison que l'industrie des cosmétiques et de la parfumerie ne s'est que depuis très récemment intéressée au recyclage du verre ménager en large quantité pour la fabrication de ses emballages en verre. En effet, la mise en valeur des produits et solutions à très forte valeur ajoutée qu'elle propose impose que les emballages en verre employés présentent une clarté et une transparence irréprochables, bien supérieures à celles attendues pour du verre d'emballage alimentaire classique.

Le document US-2015/0147497A1 décrit un récipient en verre pour aliments et boissons formé à 100% par des matériaux recyclés choisis parmi le calcin ménager, le calcin industriel et une combinaison de ceux-ci.

Les objets assignés à l'invention visent en conséquence à porter remède aux inconvénients exposés dans ce qui précède et à proposer une nouvelle composition intermédiaire de verre qui comprend une portion non négligeable de calcin ménager et permet cependant l'obtention d'un verre particulièrement blanc et transparent, dont les propriétés optiques et colorimétriques sont comparables à un verre blanc classique obtenu uniquement à base de matière première nouvelle ou à partir de calcin industriel seul ou en mélange avec une grande quantité de matière première nouvelle.

Un autre objet de l'invention vise à proposer une nouvelle composition intermédiaire de verre permettant la fabrication, à partir d'une portion non négligeable de calcin ménager, d'articles en verre blanc répondant parfaitement aux exigences propres aux applications en cosmétique ou en parfumerie en termes de colorimétrie et de transparence, tout en présentant un bilan énergétique et environnement particulièrement performant.

Un autre objet de l'invention vise à proposer une nouvelle composition intermédiaire de verre permettant de valoriser une part très importante du calcin ménager blanc collecté auprès des ménages, et delà à contribuer aux objectifs politiques et sociaux en termes de développement durable, tout en permettant le recyclage simultané du calcin industriel généré par l'activité verrière.

Un autre objet de l'invention vise à proposer un nouveau procédé d'élaboration d'une composition intermédiaire particulièrement simple, robuste et peu onéreux à mettre en œuvre.

Un autre objet de l'invention vise à proposer un nouveau procédé d'élaboration de composition intermédiaire ne nécessitant pour sa mise en œuvre que des moyens industriels classiques et parfaitement compatible avec des contraintes et exigences d'une production verrière industrielle.

Un autre objet de l'invention vise à proposer un nouveau procédé de fabrication d'un article en verre blanc, particulièrement simple, robuste et peu onéreux à mettre en œuvre.

Un autre objet de l'invention vise à proposer un nouveau procédé de fabrication d'un article en verre blanc ne nécessitant pour sa mise en œuvre que des moyens industriels classiques et parfaitement compatible avec des contraintes et exigences d'une production verrière industrielle.

Un autre objet de l'invention vise à proposer un nouveau procédé de fabrication d'un article en verre blanc permettant d'obtenir, à partir d'une portion non négligeable de calcin ménager, un article en verre blanc doté d'excellentes propriétés optiques et colorimétriques.

Un autre objet de l'invention vise à proposer un nouveau procédé de fabrication d'un article en verre blanc permettant d'obtenir, à partir d'une portion non négligeable de calcin ménager, un article en verre blanc répondant parfaitement aux exigences propres aux applications en cosmétique ou en parfumerie en termes de colorimétrie et de transparence, tout en présentant un bilan énergétique et environnement particulièrement performant.

Les objets assignés à l'invention sont atteints à l'aide d'une composition intermédiaire selon la revendication 1.

Les objets assignés à l'invention sont également atteints à l'aide d'un procédé d'élaboration d'une composition intermédiaire selon la revendication 5.

Enfin, les objets assignés à l'invention sont également atteints à l'aide d'un procédé de fabrication selon la revendication 12.

D'autres objets et avantages de l'invention apparaîtront mieux à la lecture de la description qui suit.

Selon un premier aspect, l'invention concerne une composition intermédiaire de verre destinée à subir une fusion pour être transformée en verre, c'est-à-dire un mélange vitrifiable solide contenant un certain nombre de substances entrant dans la composition dudit verre et destiné à être porté à sa température de fusion pour faire passer ledit mélange vitrifiable d'un état pulvérulent à un état liquide en vue de la fabrication d'articles en verre. Une telle composition intermédiaire de verre se présente donc de préférence sous la forme générale d'un granulat, d'aspect préférentiellement homogène et avantageusement sensiblement sec.

L'invention concerne plus particulièrement une composition intermédiaire de verre destinée à subir une fusion pour être transformée en verre blanc, c'est-à-dire en un verre incolore et transparent aux longueurs d'onde du domaine visible.

Le terme « *verre* » doit être ici compris dans son acceptation classique, et désigne donc un verre minéral. La composition intermédiaire de l'invention pourra ainsi par exemple concerner aussi bien un verre sodocalcique ou borosilicaté. De manière préférentielle cependant, elle concerne plus particulièrement un verre sodocalcique.

La composition intermédiaire de l'invention comprend une portion massique non négligeable, voire idéalement prépondérante, de calcin ménager. Selon l'invention, ladite composition intermédiaire de verre comprend ainsi au moins 15 % en masse de calcin ménager, et de manière préférentielle sensiblement 24,25 % en masse de calcin ménager.

Au sens de l'invention, on entend de préférence par *« calcin ménager»* ou *« calcin externe* » du verre d'emballage alimentaire ou « *verre creux* » (*e.g.* bouteilles, pots, flacons, bocaux) usagé et broyé, issu de la consommation des ménages et habituellement collecté, en vue de son recyclage, par le biais de filières de collecte sélective (*e.g*. containers à verre disponibles en points d'apport volontaire) et / ou multi-matériau (*e.g*. bacs de collecte individuels ou collectifs dédiés aux déchets recyclables variés en vrac).

Le calcin ménager mis en œuvre dans le contexte de l'invention a subi une opération de traitement préalable à son incorporation à ladite composition intermédiaire. Cette opération de traitement préalable comprend avantageusement une opération de broyage et de tri permettant de garantir une granulométrie de calcin ménager sensiblement comprise entre 5 mm et 50 mm. De préférence encore, ledit calcin ménager présente une teneur nulle en débris de taille strictement supérieure à 50 mm et une teneur en débris de taille strictement inférieure à 5 mm qui reste quant à elle inférieure ou égale à 5 %. La maîtrise d'une telle granulométrie permet en effet de favoriser la fusion ultérieure de la composition intermédiaire, tant en termes de température de fusion que d'homogénéité du bain fondu obtenu.

En outre, ladite opération de traitement préalable vise avantageusement à sélectionner, grâce à la mise en œuvre de moyens et procédés d'analyse, de caractérisation et de tri optique, magnétique ou encore mécanique adéquats et par ailleurs connus, un calcin ménager préférentiellement composé à au moins 99,9 % en masse de débris de verre sodocalcique blanc et mi-blanc. De préférence encore, le calcin ménager est formé de débris de verre présentant une teneur en verre de couleur verte inférieure ou égale à 0,08 % et une teneur en verre de couleur jaune, bleue ou autre qui reste inférieure ou égale à 0,03 %.

On entend ici de préférence par « *calcin ménager blanc* » un verre incolore et transparent, contenant une teneur comprise entre 0,020 % et 0,060 % en Fe₂O₃, tandis que l'expression « *calcin ménager mi-blanc* » renvoie de préférence à un verre relativement incolore et transparent dont la teneur en Fe₂O₃ est supérieure à 0,060 %. Si un tel calcin ménager blanc est sensiblement dépourvu de coloration du fait d'une teneur en Fe₂O₃ particulièrement faible, le calcin ménager mi-blanc peut quant à lui être susceptible de présenter une légère teinte allant du bleu au jaune-vert.

De préférence encore, ledit calcin ménager est avantageusement choisi tel qu'il présente une teneur en débris de métaux ferreux sensiblement nulle et une teneur en débris de métaux non-ferreux inférieure ou égale à 3 g/ tonne de calcin ménager.

Il a été en outre itérativement observé que d'autres critères techniques peuvent également être avantageusement retenus pour le choix du calcin ménager à incorporer à ladite composition intermédiaire, telles que l'une des caractéristiques suivantes, une combinaison de certaines de ces dernières ou, de manière particulièrement préférentielle, l'ensemble des caractéristiques suivantes :
- une teneur en matériaux infusibles inférieure ou égale à 10 g / tonne, dont de préférence une teneur en matériaux céramiques inférieure ou égale à 5 g / tonne et une teneur en matériaux vitrocéramiques inférieure ou égale à 5 g / tonne ;
- un taux d'humidité inférieur ou égal à 3 % ;
- une taux de perte au feu, c'est-à-dire de perte de masse résultant de l'échauffement du calcin lors de l'opération de fusion de la composition intermédiaire dans laquelle il est incorporé, inférieur ou égal à 0,05 % ;
- une teneur en substances organiques libres inférieure ou égale à 0,05 % ;
- une demande chimique en oxygène (DCO) inférieure ou égale à 400 mg / L.

Ces caractéristiques permettent notamment de garantir une excellente fusibilité du calcin ménager, et plus généralement de la composition intermédiaire, et l'obtention d'un verre sensiblement dépourvu d'inclusions infusibles susceptibles d'en dégrader les performances mécaniques et optiques.

Selon l'invention, ladite composition intermédiaire comprend en outre du calcin industriel. Au sens de l'invention, on entend de préférence par « *calcin industriel* » du verre broyé issu d'activités industrielles qui utilisent, transforment ou produisent du verre plat ou du verre creux et qui génèrent à ce titre des pertes accidentelles ou des rebus de verre.

Avantageusement, le calcin industriel préférentiellement concerné par la composition intermédiaire de l'invention est issu d'activités industrielles de fabrication de verre creux sodocalcique. De préférence encore, ledit calcin industriel est composé de débris de verre extra-blanc, c'est-à-dire des débris d'un verre incolore et transparent présentant une teneur en fer totale, exprimée en Fe₂O₃, inférieure ou égale à 0,02 %.

Pour les raisons exposées ci-dessus en lien avec le calcin ménager, les débris de verre formant ledit calcin industriel présentent, de préférence, une granulométrie sensiblement comprise entre 5 mm et 50 mm.

Afin notamment de garantir la maîtrise de la composition chimique de ce calcin industriel et de réduire encore l'impact environnemental de la composition intermédiaire de l'invention en limitant notamment les distances de transport, ledit calcin industriel est avantageusement issu, au moins partiellement et de préférence intégralement, d'installations et lignes de production verrière du site industriel même au sein duquel sera élaborée et / ou mise en oeuvre ladite composition de verre. A ce titre, ledit calcin industriel pourra être qualifié de « *calcin interne* »*.*

La mise en œuvre de calcin interne, en complément du calcin ménager, permet d'améliorer encore l'impact environnemental de la composition intermédiaire, puisqu'elle permet d'élever encore la part de verre recyclé dans le verre blanc obtenu. L'énergie nécessaire à la fusion de la composition intermédiaire est ainsi significativement réduite et l'uniformité de la composition fondue sensiblement améliorée.

Pour corriger la légère teinte verte ou vert-bleue que tend à prendre le verre blanc obtenu à partir de calcin du fait de la présence de fer dans le calcin, et en particulier dans le calcin ménager, la composition intermédiaire de l'invention comprend un agent de décoloration du verre, c'est-à-dire une substance ou un mélange de substances chimique(s) apte(s) à modifier la coloration finale du verre obtenu à partir de ladite composition intermédiaire. De préférence, cet agent de décoloration est un agent colorant qui vient modifier la perception de la teinte du verre dans des conditions d'éclairage et d'observation données en jouant par exemple un rôle d'agent absorbant optique.

Ledit agent de décoloration contient au moins deux substances colorantes, respectivement à base de sélénium ou d'erbium, et de cobalt. Ces deux substances colorantes se présentent préférentiellement respectivement sous une forme poudreuse de dioxyde de sélénium SeO₂ et de monoxyde de cobalt CoO, le SeO₂ tendant à modifier la coloration du verre vers le rouge et le CoO vers le bleu. Si l'erbium présente des propriétés colorantes très interessantes, il reste en revanche relativement onéreux par rapport au sélénium, lequel est dès lors préféré.

S'il est parfaitement possible de recourir à des teneurs en substances colorantes très importantes afin d'obtenir un verre le plus incolore possible, l'introduction de teneurs trop élevées tend à impacter négativement la transparence de ce dernier.

Ladite composition intermédiaire présentera ainsi une teneur en dioxyde de sélénium SeO₂ préférentiellement comprise entre 5 et 20 ppm, et plus préférentiellement encore sensiblement égale à 6,7 ppm.

Elle présentera avantageusement en outre une teneur en monoxyde de cobalt CoO préférentiellement comprise entre 0,1 et 5 ppm, et plus préférentiellement encore sensiblement égale à 1,5 ppm.

L'agent décolorant contient en outre, en tant qu'agent d'oxydation du fer, un composé contenant du cérium et de préférence du dioxyde de cérium CeO₂. Cet agent est destiné à porter le fer présent dans la composition intermédiaire à son plus haut niveau d'oxydation de sorte à faciliter l'action des substances colorantes pour l'obtention d'un verre le plus incolore possible. On obtient ainsi avantageusement un rédox, c'est-à-dire un rapport entre la teneur pondérale en FeO (fer ferreux) et la teneur pondérale en oxyde de fer total (exprimé sous la forme Fe₂O₃) très bas. Cet agent d'oxydation du fer est avantageusement dosé de manière à ce que la composition intermédiaire de verre présente une teneur en dioxyde de cérium CeO₂ comprise entre 20 et 30 ppm, et de préférence sensiblement égale à 25 ppm.

Alors que la poursuite d'un objectif de réduction de l'impact énergétique et environnemental de la production verrière incite de plus en plus à ne pas inclure de matière première nouvelle de verre dans les compositions intermédiaires de verre et, au contraire, à tendre vers une production de verre contenant 100 % de verre recyclé, il a été observé qu'il est au contraire particulièrement avantageux, mais pour autant absolument pas obligatoire et donc purement optionnel, de conserver une certaine quantité de matière première nouvelle au sein de ladite composition intermédiaire. En effet, du fait de la très faible quantité d'agent de décoloration mis en œuvre relativement à la quantité de calcin, se pose d'une part la difficulté de la pesée et du dosage de cet agent à l'aide de moyens industriels classiques (précisions des balances, etc.). D'autre part, il a été noté qu'au cours du procédé de fabrication du verre blanc à partir d'une composition intermédiaire, l'agent de décoloration se mélange parfois difficilement avec le calcin. Le dégazage du carbonate de calcium habituellement contenu dans la matière première nouvelle, s'il est généralement considéré comme indésirable au sens où il entraine une émission importante de CO₂, contribue néanmoins à l'homogénéité du bain de composition intermédiaire de verre en fusion. Par conséquent, en l'absence d'introduction de matière première nouvelle, on observe parfois une répartition hétérogène de l'agent de décoloration dans la masse de verre en fusion, ce qui est susceptible de nuire à la bonne qualité colorimétrique des produits en verre obtenus. Afin d'obtenir un bon compromis entre un objectif de limitation de l'emploi de matière première nouvelle et la recherche d'une bonne homogénéité de répartition de l'agent de décoloration au sein de la composition intermédiaire de verre, cette dernière comprend ainsi une certaine quantité de matière première nouvelle de verre, laquelle inclut dans ce cas ledit agent décolorant. Cette matière première nouvelle représente alors au plus 58 % en masse de ladite composition, et de préférence au plus 25 % en masse de ladite composition. De manière encore plus préférentielle, cette matière première nouvelle représente au plus 15 % en masse de ladite composition. Ladite matière première est entendue ici comme incluant ledit agent de décoloration, c'est-à-dire que la masse d'agent décolorant est incluse dans la masse de matière première nouvelle considérée, et donc dans le calcul des pourcentages massiques susvisés, puisque les substances qui composent ledit agent décolorant sont effectivement nouvelles, au sens où elles ne proviennent pas d'une voie de recyclage de substances usagées.

Comprenant de manière générale des constituants formateurs et des constituants affinants et fondants de verre, cette matière première nouvelle comprend de manière préférentielle au moins un mélange de sable humide, de carbonate de sodium, de calcaire, de spodumène, d'alumine hydratée, de carbonate de baryum et de sulfate de sodium. Ladite matière première nouvelle pourra optionnellement également comprendre des additifs complémentaires destinés, par exemple, à améliorer la résistance aux rayonnements UV du verre obtenu.

Comme on le verra dans l'exemple de réalisation et les essais décrits plus loin, un optimum a avantageusement été identifié, au cours des travaux qui ont mené à l'invention et après de nombreuses itérations, avec une composition intermédiaire comprenant :
- sensiblement 24,25 % en masse de calcin ménager,
- de préférence au plus 11,5 % en masse de matière première nouvelle de verre, cette teneur étant préférentiellement entendue comme incluant l'agent de décoloration, de préférence selon les teneurs en substances colorantes et agent d'oxydation du fer précitées, et
- de préférence au moins 64,25 % en masse de calcin industriel.

On comprend ainsi que l'invention repose sur la mise en œuvre de deux calcins distincts, à savoir du calcin ménager et du calcin industriel, ce qui permet ainsi d'obtenir, une fois prise en compte la perte au feu notamment liée au dégazage de la matière première au cours de l'étape de fusion de la composition intermédiaire, un verre blanc avantageusement composé à au moins 90 % en masse de verre recyclé, dont une part non négligeable de verre recyclé d'origine ménagère.

On notera à ce titre que la perte au feu liée à la matière première nouvelle est généralement estimée entre 10 et 20 %, tandis que l'on considère que les calcins ménagers et industriels ne subissent pas de perte au feu significative. En outre, il est considéré que l'agent de décoloration ne subit pas non plus de perte au feu notable. Ainsi, ledit verre blanc obtenu par fusion de ladite composition intermédiaire comprend ainsi avantageusement une proportion de verre recyclé d'origine ménagère sensiblement égale à 25 %.

On comprend également que l'invention repose sur le fait que lesdits calcins ménager et industriel sont préférentiellement sélectionnés de manière particulièrement rigoureuse et selon des proportions relatives bien définies pour obtenir, après fusion de la composition intermédiaire, un verre blanc doté à la fois d'excellentes propriétés optiques et colorimétriques et d'un très bon profil écologique et environnemental.

En effet, les teneurs préférentiellement choisies en calcin ménager, en calcin industriel, en agent de décoloration ainsi que, de préférence, en matière première nouvelle (hors agent de décoloration), sont telles que le verre blanc obtenu par fusion de ladite composition présente avantageusement :
- une teinte définie par des coordonnées (a, b) telles que (- 2,5 ≤ *a* ≤ +0,5 ; - 0,5 ≤ *b* ≤ +2,5) et
- une transmission lumineuse visible supérieure ou égale à 83 %,
lesquelles coordonnées (a, b) et transmission étant mesurées dans l'espace colorimétrique Lab de Hunter sous illuminant C avec un observateur 2° pour une épaisseur de verre de 40 mm.

D'un point de vue écologique et environnemental, il a été estimé que, pour un million de flacons en verre de 200 g produits par fusion et formage de ladite composition intermédiaire, les émissions de dioxyde de carbone peuvent être réduites de 13 % environ, la consommation d'énergie réduite de 13 % environ, la consommation de sable de 34 tonnes et la consommation de calcaire de 1,7 tonnes environ.

L'invention concerne également en tant que tel un procédé d'élaboration d'une composition intermédiaire destinée à subir une fusion pour être transformée en verre blanc de verre blanc, laquelle composition intermédiaire étant avantageusement conforme à la description qui en a été faite ci-avant.

Selon l'invention, ce procédé d'élaboration comprend au moins une étape de mélange au cours de laquelle on mélange du calcin ménager, du calcin industriel et un agent de décoloration du verre de sorte à former une composition intermédiaire comprenant :
- au moins 15 % en masse de calcin ménager, et de manière préférentielle sensiblement 24,25 % en masse de calcin ménager,
- du calcin industriel, et
- un agent de décoloration du verre.

De manière préférentielle, ledit procédé d'élaboration de la composition intermédiaire concerne la mise en œuvre d'un calcin ménager ayant subi une opération de traitement, visant à en garantir des caractéristiques physico-chimiques bien définies, lesquelles contribuent fortement à l'obtention des propriétés optiques et colorimétriques recherchée du verre blanc obtenu par fusion de ladite composition intermédiaire. Pour simplifier le procédé, une telle opération de traitement est préférentiellement réalisée en amont de l'incorporation dudit calcin ménager en tant que composant de ladite composition intermédiaire.

Conformément à la description qui en a été faite ci-avant, cette opération de traitement préalable comprend avantageusement une opération de broyage et de tri des débris de verre ménager, de sorte à garantir :
- que le calcin ménager soit composé à au moins 99,9 % en masse de débris de verre sodocalcique blanc et mi-blanc, et présente de préférence également une teneur en verre de couleur verte inférieure ou égale à 0,08 % et une teneur en verre de couleur jaune, bleue ou autre inférieure ou égale à 0,03 %, et
- que le calcin ménager présente une teneur en débris de métaux ferreux sensiblement nulle et une teneur en débris de métaux non-ferreux inférieure ou égale à 3 g / tonne.

En outre, ladite cette opération de traitement permet avantageusement de garantir également une granulométrie de calcin ménager sensiblement comprise entre 5 mm et 50 mm, et de préférence encore une teneur nulle du calcin ménager en débris de taille strictement supérieure à 50 mm et une teneur en débris de taille strictement inférieure à 5 mm inférieure ou égale à 5 %.

De préférence, et pour les raisons déjà explicitées plus haut, ladite opération de traitement du calcin ménager est réalisée de sorte à ce que le calcin ménager traité présente l'une des caractéristiques suivantes, une combinaison de certaines de ces dernières ou, de manière particulièrement préférentielle, l'ensemble des caractéristiques suivantes :
- une teneur en matériaux infusibles inférieure ou égale à 10 g /tonne, dont de préférence une teneur en matériaux céramiques inférieure ou égale à 5 g / tonne et une teneur en matériaux vitrocéramiques inférieure ou égale à 5 g / tonne ;
- un taux d'humidité inférieur ou égal à 3 % ;
- une taux de perte au feu, c'est-à-dire de perte de masse résultant de réchauffement du calcin lors de l'opération de fusion de la composition intermédiaire de verre à laquelle il est incorporé, inférieur ou égal à 0,05 % ;
- une teneur en substances organiques libres inférieure ou égale à 0,05 % ;
- une demande chimique en oxygène (DCO) inférieure ou égale à 400 mg / L.

Une telle opération de tri et de caractérisation peut être avantageusement réalisée par tous moyens optiques, magnétiques ou encore mécaniques adéquats et par ailleurs connus.

Le calcin industriel concerné par le procédé d'élaboration de l'invention est, quant à lui, de préférence choisi de sorte à ce qu'il soit composé, de préférence sensiblement à 100 %, de débris de verre extra-blanc, c'est-à-dire des débris d'un verre incolore et transparent d'une teneur en fer totale, exprimée en Fe₂O₃, inférieure ou égale à 0,02 %.

En outre, et pour les raisons exposées ci-dessus en lien avec le calcin ménager, les débris de verre formant ledit calcin industriel ont avantageusement subit une opération de tri permettant de s'assurer qu'ils présentent une granulométrie sensiblement comprise entre 5 mm et 50 mm.

Afin notamment de garantir la maîtrise de la composition chimique de ce calcin industriel et de réduire encore l'impact environnemental de la composition intermédiaire de l'invention en limitant notamment les distances de transport, ledit calcin industriel est avantageusement issu, au moins partiellement et de préférence intégralement, d'installations et lignes de production verrière du site industriel même au sein duquel sera élaborée et /ou mise en œuvre ladite composition intermédiaire de verre. A ce titre, ledit calcin industriel pourra être qualifié de « *calcin interne* ».

On apporte également, au cours de ladite étape de mélange, de la matière première nouvelle de verre. Cette dernière est dosée de sorte à ce que ladite composition comprenne au plus 58 %, et de préférence au plus 25 % en masse de ladite matière première nouvelle, laquelle inclut ledit agent de décoloration (comme expliqué plus haut en lien avec la description de la composition intermédiaire de l'invention). De manière encore plus préférentielle, ladite composition comprend au plus 15 % en masse de ladite matière première.

De manière particulièrement avantageuse, en vue de l'obtention de l'optimum identifié précédemment en relation avec la description de ladite composition intermédiaire, on apporte plus précisément au cours de cette étape de mélange :
- sensiblement 24,25 % en masse de calcin ménager,
- de préférence au plus 11,5 % en masse de ladite matière première nouvelle, cette teneur étant préférentiellement entendue comme incluant celle de l'agent de décoloration,
- de préférence au moins 64,25 % en masse de calcin industriel.

Afin de faciliter la pesée et du dosage dudit agent de décoloration à l'aide de moyens industriels classiques, c'est-à-dire sans avoir notamment à recourir à des balances de précision spécifiques, et de garantir une bonne répartition de l'agent de décoloration au sein de ladite composition intermédiaire, il est avantageux de prévoir, de préférence préalablement à ladite étape de mélange, une étape de préparation de ladite matière première au cours de laquelle on mélange :
- d'une part, au moins du sable humide, du carbonate de sodium, du calcaire, du spodumène, de l'alumine hydratée, du carbonate de baryum et du sulfate de sodium en tant que constituants formateurs, affinants et fondants de verre blanc neuf, et
- d'autre part, ledit agent de décoloration.

En outre l'introduction dudit agent de décoloration du verre à ladite composition intermédiaire permet de limiter significativement le risque d'évaporation au cours de la fusion de certaines substances colorantes employées. En effet, lorsque le sélénium est classiquement intégré à la composition intermédiaire alors que celle-ci est en fusion, il a tendance à s'évaporer très rapidement, sans totalement apporter la contribution souhaitée à la décoloration du verre.

Toujours dans l'optique de conférer audit procédé d'élaboration la plus grande compatibilité possible avec les contraintes inhérentes à une exploitation industrielle, ce dernier peut avantageusement comprendre une étape de préparation dudit agent de décoloration au cours de laquelle on mélange :
- au moins deux substances colorantes, respectivement à base de sélénium ou d'erbium, et de cobalt, un composé contenant du cérium en tant qu'agent d'oxydation du fer, avec
- un composant de la matière première nouvelle parmi ceux précités, par exemple du sable humide ou de l'alumine hydratée.

De préférence, et tel que décrit précédemment, lesdites substances colorantes et agent d'oxydation du fer sont respectivement du dioxyde de sélénium SeO2, du monoxyde de cobalt CoO et du dioxyde de cérium CeO₂, avantageusement dosés pour atteindre les teneurs ou plages de teneurs respectives explicitées ci-avant en relation avec la description de la composition intermédiaire de l'invention et de ses modes de réalisation préférentiels.

Ce mode de préparation de l'agent de décoloration permet ainsi avantageusement de doser facilement de très faible quantité de substances colorantes et agent d'oxydation du fer, relativement à la quantité des autres composants de la matière première et de ladite composition intermédiaire.

S'il est parfaitement envisageable de mélanger ainsi lesdites au moins deux substances colorantes et ledit agent d'oxydation du fer avec du sable humide, il est cependant encore plus avantageux de réaliser ce mélange avec une certaine quantité d'alumine hydratée en lieu et place du sable humide. En effet, ce dernier est habituellement stocké en silos de plusieurs tonnes, rendant de fait complexe le dosage d'une faible quantité de sable (typiquement de l'ordre de la dizaine de kilogrammes, voire du kilogramme), tandis que l'alumine hydratée est au contraire aisément disponible en sacs de quelques dizaines de kilogrammes, lesquels sont dès lors plus facilement manipulables.

Si ladite étape de mélange pourrait tout à fait être réalisée par introduction des différents composants de ladite composition intermédiaire dans un mélangeur à tambour, elle est cependant préférentiellement réalisée par le seul dépôt, successif ou simultané, de chacun desdits composants sur une bande transporteuse, suivi du stockage de ladite composition intermédiaire en silo vertical. En effet, il a été observé qu'un tel mode de réalisation de ladite étape de mélange permet d'obtenir à lui seul une composition intermédiaire d'une homogénéité très satisfaisante, sans qu'il s'avère pour autant nécessaire de mettre en œuvre de mélangeur complexe et coûteux. Le procédé d'élaboration de l'invention est par conséquent particulièrement robuste, simple et peu onéreux à mettre en œuvre avec des moyens industriels classiques.

L'invention concerne finalement en tant que tel un procédé de fabrication d'un article en verre blanc, par exemple pour, mais non nécessairement limité à, une application en cosmétique ou en parfumerie. Ce procédé est préférentiellement de type industriel et peut-être à ce titre être partiellement voire totalement automatisé.

Ledit article est un récipient en verre creux, par exemple de type pot, flacon, bouteille ou encore fiole, destiné à une application en cosmétique ou en parfumerie, et plus spécifiquement encore destiné à accueillir en son sein une préparation cosmétique (crème, maquillage, lotion, etc.) pulvérulente, pâteuse ou encore liquide, ou bien une composition olfactive de type parfum (eau de toilette, eau de parfum, eau de Cologne, etc.).

Selon l'invention, ce procédé de fabrication comprend au moins une étape d'élaboration d'une composition intermédiaire destinée à subir une fusion pour être transformée en verre blanc. Cette étape d'élaboration est avantageusement réalisée selon un procédé conforme au procédé d'élaboration décrit ci-avant, lequel procédé d'élaboration est donc mis en œuvre de sorte à obtenir une composition intermédiaire préférentiellement conforme à la description qui en a également été faite ci-avant.

Ledit procédé de fabrication comprend également, une étape de fusion de ladite composition intermédiaire ainsi élaborée, destinée à transformer cette dernière en verre blanc, c'est-à-dire à faire passer le mélange vitrifiable solide que forme cette dernière d'un état pulvérulent à un état liquide en vue de la fabrication dudit article en verre. Pour les raisons déjà exposées plus haut, ladite étape de fusion est de préférence consécutive à ladite étape d'élaboration de la composition intermédiaire, de sorte qu'elle s'applique à une composition intermédiaire complète et ne met avantageusement en œuvre aucune introduction de composants supplémentaires.

De manière avantageuse, ladite étape de fusion est réalisée dans un four industriel permettant une production de masse à cadence élevée, et plus particulièrement dans un four continu, c'est-à-dire un four à bassin alimenté en continu en composition intermédiaire en amont de sorte à obtenir en aval de manière continue du verre blanc. Réalisée avantageusement consécutivement à une étape d'introduction de ladite composition intermédiaire dans un four verrier, par exemple par l'intermédiaire d'une trémie d'enfournement, ladite étape de fusion est avantageusement suivie d'une étape de formage dudit article en verre selon tout procédé verrier classique (soufflage, pressage, étirage, etc.).

Ainsi, le procédé de fabrication de l'invention est particulièrement efficace et robuste, et est ainsi particulièrement bien adapté à l'obtention simple et bon marché à partir d'une grande quantité de calcin ménager d'articles en verre blanc, et plus particulièrement de récipients en verre creux, dotés d'excellentes propriétés optiques et colorimétriques. Des essais d'élaboration d'une composition intermédiaire conforme à l'invention, selon un procédé d'élaboration lui aussi conforme à l'invention, ont été réalisés en conditions expérimentales puis industrielles. Dans ce contexte, il a été élaboré une composition intermédiaire à partir de :
- 162 kg de calcin ménager blanc et mi-blanc ;
- 423 kg de calcin industriel interne extra-blanc ;
- 43,4 kg de sable humide, 16,5 kg de carbonate de sodium, 1,9 kg de calcaire, 4,2 kg de spodumène, 2,15 kg d'alumine hydratée, 5,6 kg de carbonate de baryum et 1,03 kg de sulfate de sodium ;
- 0,05 kg d'agent décolorant, dont la composition massique de l'agent décolorant, exprimée pour 10 kg d'agent décolorant, est la suivante: 5,661 kg d'alumine hydratée, 0,190 kg de monoxyde de cobalt CoO, 3,283 kg de dioxyde de cérium CeO₂ et 0,866 kg de dioxyde de sélénium SeO₂.

Les caractéristiques optiques et colorimétriques du verre obtenu après fusion en four continu de cette composition intermédiaire ont ensuite été évaluées dans l'espace colorimétrique Lab de Hunter sur la base d'un cube de verre de 4 cm de côté sous illuminant C et Observer 2°. Les résultats obtenus sont compilés dans le tableau ci-dessous.

| | **L** | **a** | **b** |
|---|---|---|---|
| *Essai 01* | 84,7 | -1,2 | 0,3 |
| *Essai 02* | 85,5 | -1,1 | -0,2 |
| *Essai 03* | 85,6 | -0,45 | 0,05 |
| *Essai 04* | 84,1 | -0,1 | 1,15 |
| *Essai 05* | 83,8 | 0,1 | 1,55 |
| *Essai 06* | 83,3 | 0,156 | 1,45 |
| *Essai 07* | 84,4 | 0,2 | 1,55 |
| *Essai 08* | 83,7 | -0,3 | 0,95 |
| *Essai 09* | 83,5 | -0,2 | 0,9 |
| *Essai 10* | 84,3 | -0,55 | 0,45 |
| | | | |
| **Valeur max** | 85,6 | 0,2 | 1,55 |
| **Valeur moy** | 84,3 | -0,3 | 0,8 |
| **Valeur min** | 83,3 | -1,2 | -0,2 |

Comme on l'observe à la lecture du tableau ci-dessous, les teneurs choisies en calcin ménager, en calcin industriel, en agent de décoloration, et avantageusement également en matière première nouvelle, permettent d'aboutir après fusion de la composition intermédiaire, un verre blanc qui présente :
- des coordonnées (*a*, *b*) sont telles que (- 0,45 ≤ *a* ≤ +0,2 ; - 0,2 ≤ *b* ≤ +0,05) et
- transmission lumineuse visible supérieure ou égale à 85 %.

Ces excellents résultats, obtenus à partir d'une très grande quantité de verre recyclé, dont une portion non négligeable de calcin ménager (telle que le verre obtenu provient sensiblement à 25 % de verre recyclé d'origine ménagère), sont tout à fait comparables aux caractéristiques d'un verre blanc classique répondant aux exigences propres aux applications en cosmétique ou en parfumerie en termes de colorimétrie et de transparence, lequel verre blanc classique est en revanche habituellement composé de seulement 30 % de calcin interne pour 70 % de matière première nouvelle, agent de décoloration inclus.

En conclusion, l'invention permet d'obtenir *in fine* des articles en verre blanc qui, tout en satisfaisants aux exigences élevées propres aux applications en cosmétique et en parfumerie en termes de blancheur et de transparence, présentent un impact écologique et environnemental particulièrement faible et maîtrisé.

## Revendications

1. Composition intermédiaire destinée à subir une fusion pour être transformée en verre blanc, c'est-à-dire en un verre incolore et transparent aux longueurs d'onde du domaine visible, pour fabriquer un récipient en verre creux destiné à une application en cosmétique ou en parfumerie, ladite composition comprenant :
- au moins 15 % en masse de calcin ménager, du calcin industriel, et un agent de décoloration du verre,
- et de la matière première nouvelle de verre, laquelle inclut ledit agent de décoloration et représente au plus 58 %, en masse de ladite composition,
ledit calcin ménager ayant subi une opération de traitement préalable à son incorporation à ladite composition intermédiaire, de sorte à ce que ledit calcin ménager soit composé à au moins 99,9 % en masse de débris de verre sodocalcique blanc et mi-blanc,
ledit agent de décoloration contenant au moins deux substances colorantes, respectivement à base de sélénium ou d'erbium et de cobalt, et un composé contenant du cérium en tant qu'agent d'oxydation du fer.

2. Composition selon la revendication précédente, **caractérisée en ce que** ladite matière première nouvelle de verre représente au plus 25 %, et de préférence au plus 15 % en masse de ladite composition.

3. Composition selon l'une quelconque des revendications précédentes, **caractérisée en ce que** ledit calcin ménager présente une teneur en débris de métaux ferreux sensiblement nulle et une teneur en débris de métaux non-ferreux inférieure ou égale à 3 g/ tonne.

4. Composition selon l'une quelconque des revendications précédentes, **caractérisée en ce que** ledit calcin industriel est composé sensiblement à 100 % de débris de verre extra-blanc d'une teneur en fer total sous la forme de Fe₂O₃ inférieure ou égale à 0,02 %.

5. Procédé d'élaboration d'une composition intermédiaire destinée à subir une fusion pour être transformée en verre blanc, c'est-à-dire en un verre incolore et transparent aux longueurs d'onde du domaine visible, pour fabriquer un récipient en verre creux destiné à une application en cosmétique ou en parfumerie, ledit procédé comprenant au moins une étape de mélange au cours de laquelle
- on mélange du calcin ménager, du calcin industriel et un agent de décoloration de sorte à former ladite composition, cette dernière comprenant au moins 15 % en masse de calcin ménager, du calcin industriel, et un agent de décoloration du verre,
- on apporte également de la matière première nouvelle de verre, de sorte à ce que ladite composition comprenne au plus 58 % en masse de ladite matière première nouvelle, laquelle inclut ledit agent de décoloration,
ledit calcin ménager ayant subi une opération de traitement de sorte à ce que ledit calcin ménager soit composé à au moins 99,9 % en masse de débris de verre sodocalcique blanc et mi-blanc,
ledit agent de décoloration contenant au moins deux substances colorantes, respectivement à base de sélénium ou d'erbium et de cobalt, et un composé contenant du cérium en tant qu'agent d'oxydation du fer.

6. Procédé selon la revendication précédente, **caractérisé en ce que**, au cours de ladite étape de mélange, on apporte la matière première nouvelle de verre, de sorte à ce que ladite composition comprenne au plus 25 %, et de préférence au plus 15 % en masse de ladite matière première nouvelle, laquelle inclut ledit agent de décoloration.

7. Procédé selon la revendication 5 ou 6, **caractérisée en ce que** ladite composition comprend sensiblement 24,25 % en masse de calcin ménager.

8. Procédé selon la revendication 6 ou 7, **caractérisé en ce qu'**il comprend une étape de préparation de ladite matière première, préalable à ladite étape de mélange, au cours de laquelle on mélange au moins du sable humide, du carbonate de sodium, du calcaire, du spodumène, de l'alumine hydratée, du carbonate de baryum, du sulfate de sodium, et ledit agent de décoloration.

9. Procédé selon l'une quelconque des revendications 5 à 8 **caractérisé en ce qu'**il comprend une étape de préparation dudit agent de décoloration au cours de laquelle on mélange lesdites au moins deux substances colorantes et de l'alumine hydratée.

10. Procédé selon l'une quelconque des revendications 5 à 9 **caractérisé en ce que** ledit calcin ménager présente une teneur en débris de métaux ferreux sensiblement nulle et une teneur en débris de métaux non-ferreux inférieure ou égale à 3 g / tonne.

11. Procédé selon l'une quelconque des revendications 5 à 10 **caractérisé en ce que** ledit calcin industriel est composé de débris de verre extra-blanc d'une teneur en fer total sous la forme de Fe₂O₃ inférieure ou égale à 0,02 %.

12. Procédé de fabrication d'un article en verre blanc, pour une application en cosmétique ou en parfumerie, **caractérisé en ce qu'**il comprend
- au moins une étape d'élaboration selon un procédé conforme à l'une quelconque des revendications 5 à 11 d'une composition intermédiaire destinée à subir une fusion, de préférence réalisée dans un four continu, pour être transformée en verre blanc, c'est-à-dire en un verre incolore et transparent aux longueurs d'onde du domaine visible,
- et une étape de fusion de ladite composition intermédiaire ainsi élaborée.

## Patentansprüche

1. Zwischenprodukt, das dazu bestimmt ist, einem Schmelzen unterzogen zu werden, um in Weißglas umgewandelt zu werden, das heißt in ein bei den Wellenlängen des sichtbaren Bereichs farbloses und transparentes Glas, um einen hohlen Glasbehälter herzustellen, der für eine Anwendung in der Kosmetik oder Parfümerie bestimmt ist, wobei das Produkt umfasst:
- mindestens 15 Massen-% Haushaltsglasbruch, Industrieglasbruch und ein Entfärbungsmittel für Glas,
- und neuen Glasrohstoff, der das Entfärbungsmittel einschließt und höchstens 58 Massen-% des Produkts darstellt,
wobei der Haushaltsglasbruch vor seiner Einarbeitung in das Zwischenprodukt einem Behandlungsschritt unterzogen wurde, so dass der Haushaltsglasbruch zu mindestens 99,9 Massen-% aus weißen und halbweißen Kalk-Natron-Glasscherben besteht,
wobei das Entfärbungsmittel mindestens zwei Färbesubstanzen, jeweils auf Basis von Selen oder Erbium und Kobalt, und eine Cer-haltige Zusammensetzung als Eisen-Oxidationsmittel enthält.

2. Produkt nach dem vorhergehenden Anspruch, **dadurch gekennzeichnet, dass** der neue Glasrohstoff höchstens 25 Massen-% und vorzugsweise höchstens 15 Massen-% des Produkts darstellt.

3. Produkt nach einem der vorhergehenden Ansprüche, **dadurch gekennzeichnet, dass** der Haushaltsglasbruch einen Gehalt an eisenhaltigen Metallsplittern im Wesentlichen gleich Null und einen Gehalt an nicht eisenhaltigen Metallsplittern kleiner oder gleich 3 g/Tonne aufweist.

4. Produkt nach einem der vorhergehenden Ansprüche, **dadurch gekennzeichnet, dass** der Industrieglasbruch im Wesentlichen zu 100 % aus extraweißen Glasscherben mit einem Gesamteisengehalt in Form von Fe₂O₃ kleiner oder gleich 0,02 % besteht.

5. Verfahren zur Herstellung eines Zwischenprodukts, das dazu bestimmt ist, einem Schmelzen unterzogen zu werden, um in Weißglas umgewandelt zu werden, das heißt in ein bei den Wellenlängen des sichtbaren Bereichs farbloses und transparentes Glas, um einen hohlen Glasbehälter herzustellen, der für eine Anwendung in der Kosmetik oder Parfümerie bestimmt ist, wobei das Verfahren mindestens einen Schritt des Mischens umfasst, während dessen
- Haushaltsglasbruch, Industrieglasbruch und ein Entfärbungsmittel gemischt werden, um das Produkt zu bilden, wobei dieses letztgenannte mindestens 15 Massen-% Haushaltsglasbruch, Industrieglasbruch und ein Entfärbungsmittel des Glases umfasst,
- auch neuer Glasrohstoff zugeführt wird, so dass das Produkt höchstens 58 Massen-% des neuen Rohstoffes umfasst, der das Entfärbungsmittel einschließt,
wobei der Haushaltsglasbruch einem Behandlungsschritt unterzogen wurde, so dass der Haushaltsglasbruch zu mindestens 99,9 Massen-% aus weißen und halbweißen Kalk-Natron-Glassscherben besteht,
wobei das Entfärbungsmittel mindestens zwei Färbesubstanzen, jeweils auf Basis von Selen oder Erbium und Kobalt, und eine Cer-haltige Zusammensetzung als Eisen-Oxidationsmittel enthält.

6. Verfahren nach dem vorhergehenden Anspruch, **dadurch gekennzeichnet, dass** während des Schrittes des Mischens neuer Glasrohstoff zugeführt wird, so dass das Produkt höchstens 25 Massen-% und vorzugsweise 15 Massen-% des neuen Rohstoffes umfasst, der das Entfärbungsmittel einschließt.

7. Verfahren nach Anspruch 5 oder 6, **dadurch gekennzeichnet, dass** das Produkt im Wesentlichen 24,25 Massen-% Haushaltsglasbruch umfasst.

8. Verfahren nach Anspruch 6 oder 7, **dadurch gekennzeichnet, dass** es einen Schritt der Herstellung des Rohstoffes vor dem Schritt des Mischens umfasst, während dessen mindestens nasser Sand, Natriumkarbonat, Kalk, Spodumen, hydratisiertes Aluminiumoxid, Baryumkarbonat, Natriumsulfat und das Entfärbungsmittel gemischt werden.

9. Verfahren nach einem der Ansprüche 5 bis 8, **dadurch gekennzeichnet, dass** es einen Schritt der Herstellung des Entfärbungsmittels umfasst, während dessen die mindestens zwei Färbesubstanzen und hydratisiertes Aluminiumoxid gemischt werden.

10. Verfahren nach einem der Ansprüche 5 bis 9, **dadurch gekennzeichnet, dass** der Haushaltsglasbruch einen Gehalt an eisenhaltigen Metallsplittern im Wesentlichen gleich Null und einen Gehalt an nicht eisenhaltigen Metallsplittern kleiner oder gleich 3 g/Tonne aufweist.

11. Verfahren nach einem der Ansprüche 5 bis 10, **dadurch gekennzeichnet, dass** der Industrieglasbruch aus extraweißen Glasscherben mit einem Gesamteisengehalt in Form von Fe₂O₃ kleiner oder gleich 0,02 % zusammengesetzt ist.

12. Verfahren zur Herstellung eines Artikels aus Weißglas für eine Anwendung in der Kosmetik oder in der Parfümerie, **dadurch gekennzeichnet, dass** es umfasst:
- mindestens einen Schritt der Herstellung nach einem Verfahren nach einem der Ansprüche 5 bis 11 eines Zwischenprodukts, das dazu bestimmt ist, einem Schmelzen unterzogen zu werden, das vorzugsweise in einem Durchlaufofen durchgeführt wird, um in Weißglas umgewandelt zu werden, das heißt in ein bei den Wellenlängen des sichtbaren Bereichs farbloses und transparentes Glas,
- und einen Schritt des Schmelzens des so hergestellten Zwischenprodukts.

## Claims

1. Intermediate composition intended to undergo fusion in order to be transformed into white glass, that is to say into a glass that is colourless and transparent at the wavelengths in the visible domain, in order to manufacture an hollow glass container intended for a cosmetic or perfumery application, said composition comprising:
- at least 15% by mass domestic cullet, industrial cullet and an agent for decolourising glass,
- and new glass raw material, which includes said decolourising agent and represents no more than 58% by mass of said composition,
said domestic cullet having undergone a treatment operation prior to incorporation thereof in said intermediate composition, so that said domestic cullet is composed by mass of at least 99.9% white and half-white soda-lime glass debris,
said decolourising agent containing at least two colouring substances, respectively based on selenium or erbium and cobalt, and a compound containing cerium as an agent for oxidising iron.

2. Composition according to the preceding claim, **characterised in that** said new glass raw material represents by mass no more than 25% and preferably no more than 15% of said composition.

3. Composition according to any of the preceding claims, **characterised in that** said domestic cullet has a substantially zero ferrous metal debris content and a non-ferrous metal debris content of less than or equal to 3 g/tonne.

4. Composition according to any of the preceding claims, **characterised in that** said industrial cullet is composed approximately entirely of extra-white glass debris with a total iron content in the form of Fe₂O₃ of less than or equal to 0.02%.

5. Method for producing an intermediate composition intended to undergo fusion in order to be transformed into white glass, that is to say a glass that is colourless and transparent at the wavelengths in the visible domain, in order to manufacture a hollow glass container intended for a cosmetic or perfumery application, said method comprising at least one mixing step during which
- domestic cullet, industrial cullet and a decolourising agent are mixed so as to form said composition, the latter comprising by mass at least 15% domestic cullet, industrial cullet and an agent for decolourising the glass,
- new glass raw material is also added, so that said composition comprises by mass no more than 58% said new raw material, which includes said decolourising agent,
said domestic cullet having undergone a treatment operation so that said domestic cullet is composed by mass of at least 99.9% white and half-white soda-lime glass debris,
said decolourising agent containing at least two colouring substances, respectively based on selenium or erbium and cobalt, and a compound containing cerium as an agent for oxidising iron.

6. Method according to the preceding claim, **characterised in that**, during said mixing step, said new glass raw material is added, so that said composition comprises by mass no more than 25% and preferably no more than 15% said new raw material, which includes said decolourising agent.

7. Method according to claim 5 or claim 6, **characterised in that** said composition comprises by mass approximately 24.25% domestic cullet.

8. Method according to claim 6 or claim 7, **characterised in that** it comprises a step of preparing said raw material, prior to said mixing step, during which at least moist sand, sodium carbonate, limestone, spodumene, hydrated alumina, barium carbonate, sodium sulfate and said decolourising agent are mixed.

9. Method according to any of claims 5 to 8, **characterised in that** it comprises a step of preparing said decolourising agent during which said at least two colouring substances and hydrated alumina are mixed.

10. Method according to any of claims 5 to 9, **characterised in that** said domestic cullet has a substantially zero ferrous metal debris content and a non-ferrous metal debris content of less than or equal to 3 g/tonne.

11. Method according to any of claims 5 to 10, **characterised in that** said industrial cullet is composed of extra-white glass debris with a total iron content in the form of Fe₂O₃ of less than or equal to 0.02%.

12. Method for manufacturing an article made from white glass, for a cosmetic or perfumery application, **characterised in that** it comprises
- at least one step of producing, in accordance with a method according to any of claims 5 to 11, an intermediate composition intended to undergo fusion, preferably carried out in a continuous furnace, in order to be transformed into white glass, that is to say into a glass that is colourless and transparent at the wavelengths in the visible domain,
- and a step of fusing said intermediate composition thus produced.
